# EUROPÄISCHE PATENTSCHRIFT

(11) **EP 2 094 433 B1**
(45) Veröffentlichungstag und Bekanntmachung des Hinweises auf die Patenterteilung: **06.07.2011**
(21) Anmeldenummer: 07847591.0
(22) Anmeldetag: 30.11.2007
(51) Int. Cl.: B23K 37/06

(54) **PROFILSTÜCK AUS KERAMIK ZUR BILDUNG VON SCHMELZBAD-SICHERUNGSUNTERLAGEN FÜR SCHWEISSVERFAHREN**
PROFILED PIECE MADE OF CERAMIC FOR THE FORMATION OF SECURING SUPPORTS FOR MOLTEN WELD POOLS FOR WELDING
PROFILE EN CERAMIQUE POUR FORMER DES CALES DE PROTECTION DE BAIN DE FUSION POUR DES PROCEDES DE SOUDAGE

(30) Priorität: 08.12.2006 DE 102006057959
(43) Veröffentlichungstag der Anmeldung: 02.09.2009
(73) Patentinhaber: Waibel, Björn, Shoreham by Sea West Sussex BN43 5LJ (GB)
(72) Erfinder: WAIBEL, Manfred, verstorben (DE)
(74) Vertreter: UEXKÜLL & STOLBERG
(86) Internationale Anmeldenummer: PCT/EP2007/063075
(87) Internationale Veröffentlichungsnummer: WO 2008/068199

(56) Entgegenhaltungen:
- DE-U1- 20 302 707

## Beschreibung

Die Erfindung betrifft ein Profilstück gemäß Oberbegriff des Patentanspruchs 1.

Eine derartige Schmelzbadsicherungsunterlage in Form eines Profilstücks ist aus der DE 27 19 864 A1 bekannt. Sie dient beispielsweise im Schiffbau dazu, beim Einseitenschweißen den Bereich der Schweißnahtwurzel abzudecken bzw. zu unterstützen, so dass von der Gegen- bzw. Oberseite geschweißt werden kann und eine Schweißung von der anderen Seite überflüssig wird. Zwischen der Badsicherungsunterlage und der entstehenden Schweißnahtwurzel lagert sich nämlich die später zu entfernende Schlacke ab, während die Schweißnahtwurzel geringfügig über die entsprechenden Flächen der verbundenen Teile hinausragt. Die geschweißten Bauteile brauchen also nicht gewendet und der Wurzelbereich zur nachfolgenden Gegen- bzw. Wurzelschweißung bearbeitet zu werden. Da die Menge des aufzuwendenden Schweißgutes möglichst gering gehalten werden soll, hat die bekannte Badsicherungsunterlage eine nutförmige Vertiefung mit einer auf den Schweißprozess optimierten Querschnittsfläche.

Ein Nachteil der bekannten Badsicherungsunterlage besteht jedoch darin, dass sie sowohl in der Draufsicht, als auch in der Ansicht im Wesentlichen rechtwinkelig gestaltet ist, so dass damit nur gerade Schweißnähte oder geradlinige Bauteile ohne Spaltbildung zwischen den Profilstücken unterlegt werden können.

Aus der Deutschen Gebrauchsmusterschrift DE 203 02 707 U1 ist eine Schmelzbadsicherungsunterlage mit Kugelgelenkflächen bekannt, bei der die Vorderseite und die Rückseite den gleichen Kugelradius haben. Die Mittelpunkte der Kugelflächen liegen dabei in der Mittelebene der Keramikstücke, die durch Aneinanderlegen letztendlich die Schmelzbadsicherungsunterlage bilden.

Ein Nachteil dieser bekannten Keramikstücke besteht darin, dass bei nicht ganz aneinander liegenden Kermikstücken ein kleiner Spalt entsteht, der von der Oberseite zur Unterseite durchgängig ist, so dass der Lichtbogen durchbrennen und Schmelze von der Schweißnaht hindurchtropfen kann.

**Aufgabe** der Erfindung ist es, die bekannte SchmelzbadSicherungsunterlage aus Keramik für Schweißverfahren dahingehend zu verbessern, dass sie spaltfrei an sowohl in der Ebene, als auch an räumlich gekrümmte Schweißnähte anlegbar ist.

Zur **Lösung** dieser Aufgabe dienen Profilstücke, die die Merkmale des Patentanspruchs 1 aufweisen.

Dadurch können die erfindungsgemäßen Keramikprofilstücke so aneinander gelegt werden, dass jeweils die konvexe Vorderseite eines Keramikprofilstücks in die konkave Rückseite eines anderen Profilstücks paßt, und zwar so, dass dabei kein Spalt entsteht, da die Hinterkante der Unterseite eines vorhergehenden Profilstücks die Vorderkante eines folgenden Profilstücks überlappt oder hinterschneidet. Auf diese Weise existiert auch bei nicht unmittelbar aneinander liegenden Profilstücken kein durchgehender Spalt, durch den Schmelzbad tropfen könnte.

Die erfindungsgemäßen Schmelzbadunterlagen sind vor allem für das Einseiten-Lichtbogenschweißen bestimmt, lassen sich aber auch bei anderen Schweißverfahren wie Autogenschweißen o.ä. einsetzen.

Unter "Profilstück" bzw. "Keramikprofilstück" werden hierin Elemente aus Keramik verstanden, die sich als Schweißbadunterlagen eignen und die in ihrer Längserstrekkung das gleiche Querschnittsprofil haben. Dabei kommt es auf die Form des Querschnitts nicht entscheidend an; dieser kann quadratisch, rechteckig, trapezförmig, kreisförmig, elliptisch oder auch polygonal sein, wobei es bei einem polygonalen Querschnitt wiederum nicht darauf ankommt, dass das Polygon regelmäßig ist, denn es kann je nach Anwendungsfall auch unregelmäßig sein.

Es wird ferner darauf hingewiesen, dass die aus Kugelflächen zu bildenden Vorder- und Rückseiten nicht ideale Kugelflächen zu sein brauchen, sondern dass auch angenähert kugelflächige Formen.

Vorteilhafte Ausgestaltungen der Erfindung sind Gegenstand der Unteransprüche.

Die Erfindung wird nachfolgend anhand eines Ausführungsbeispiels näher erläutert; es zeigen:
- **Figur 1**: ein Ausführungsbeispiel eines Profilstücks in perspektivischer Darstellung;
- **Figur 2**: eine Seitenansicht des Ausführungsbeispiels von Figur 1; und
- **Figur 3**: zwei mit geringem Abstand aneinander gelegte Pro- filstücke gemäß Fig. 1 und 2.

In den Figuren sind gleiche Teile mit gleichen Bezugszeichen versehen.

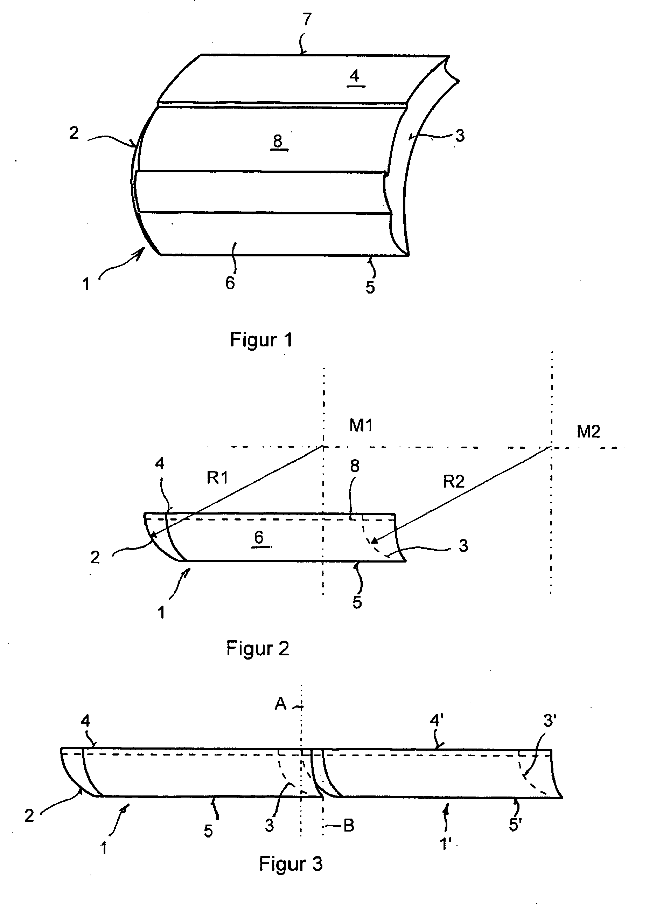

**Figur 1** zeigt in perspektivischer Darstellung ein Profilstück 1 zur Verwendung als Schmelzbadsicherungsunterlage zusammen mit einer Vielzahl weiterer Profilstücke gleicher Bauart, die unter einer zu bildenden Schweißnaht und damit entlang einer Schweißfuge aneinander gelegt werden sollen. Das Profilstück 1 besteht aus einem in der Draufsicht annähernd rechtecksförmigem Keramikkörper mit einer Vorderseite 2, einer Rückseite 3, einer Oberseite 4, einer Unterseite 5 sowie mit Seitenrändern 6 und 7. Die Breite des Pofilstücks 1 ist etwa drei- bis fünfmal so groß wie seine Dicke, wobei mit der Dicke der Abstand der Oberseite 4 zur Unterseite 5 gemeint ist, während unter der Breite der Abstand der beiden Seitenränder 6 und 7 voneinander verstanden wird.

In die Oberseite 4 ist wie bei der bekannten Schmelzbadsicherungsunterlage eine von der Vorderseite 2 zur Rückseite 3 durchgehende Vertiefung 8 eingearbeitet, deren Breite den größten Teil der Oberseite 4 ausmacht und die in einer Ausführungsform 5mm bis 30mm, vorzugsweise 11 bis 15mm breit ist, während ihre maximale Tiefe etwa 1 bis 3mm, vorzugsweise 1,2mm ausmacht. In der Regel ist die Vertiefung 8 an allen Stellen gleic+h tief, wie dies auch bei der bekannten Schmelzbadsicherungsunterlage nach der DE 27 19 846 A1 der Fall ist. Die Vertiefung 8 kann in einer anderen Ausführungsform auch verrundet sein, so dass sie eine konkave Rinne bildet.

Ein wesentliches Merkmal der Erfindung besteht nun darin, dass die Seitenränder 6 und 7 nicht durch rechtwinkelig dazu verlaufende Vorder- und Rückseiten 2 und 3 miteinander verbunden sind, die ebene Flächen bilden, sondern dass die Vorderseite 2 und auch die Rückseite 3 Kugelflächen oder Kugelzonen mit gleichem Radius sind. Dadurch ist es möglich, mehrere Profilstücke 1 ohne Spaltbildung aneinander zu legen, und zwar nicht nur in einer Ebene, sondern auch in einer räumlich gekrümmten Fläche, da es die Kugelradien erlauben, aneinanderstoßende Stücke der erfindungsgemäßen Profilstükke nicht nur in der Ebene der Zeichenfläche ohne Spalt gegeneinander zu verschwenken, sondern auch dreidimensonal aus der Zeichenebene heraus, denn es paßt jeweils eine konvexe Vorderseite 2 eines Profilstücks 1 in eine konkave Rückseite 3 eines benachbarten bzw. anstoßenden Profilstücks. Dadurch ist es möglich, auch komplizierte Schweißnahtverläufe eng mit den erfindungsgemäßen Schmelzbadsicherungsunterlagen zu unterlegen, was eine ganz wesentlichen Vereinfachung gegenüber Schweißungen mit bekannten Keramikunterlagen darstellt.

**Figur 2** zeigt eine Seitenansicht des Profilstücks 1, wobei man erkennt, dass die Mittelpunkte M1 und M2 für die Krümmungen der Vorderseite 2 und der Rückseite 3 auf gleicher Höhe über der Oberseite 4 liegen, also mithin in einer Parallelebene zur Ebene der Oberseite 4. Ferner sind die Mittelpunkte M1 und M2 die Mittelpunkte von zwei Kugeln mit gleichen Radien R1 und R2, so dass die Kugelflächen, die die Vorderseite 2 und die Rückseite 3 bilden, ineinander passen. Wenn außerdem der senkrechte Abstand der Mittelpunkte M1 und M2 zur Oberseite 4 gleich groß ist, dann haben Vorderseite 2 und Rückseite 3 identische Verläufe.

**Figur 3** zeigt die Verhältnisse, wie sie entstehen, wenn zwei oder mehrere Profilstücke 1, 1' nicht ganz aneinander gelegt sind, was in der Praxis durchaus passieren kann, da das Positionieren der Profilstücke unter der Schweißfuge von Hand erfolgt. Ebenso erfolgt das Fixieren der Profilstücke, beispielsweise durch Klebeband, von Hand, so dass Spaltbildungen in der Größenordnung von 0,1 - 0,5mm oder in manchen Fällen sogar bis zu 1mm nahezu unvermeidlich sind. In Figur 3 ist dieser Spalt durch den Abstand der beiden strichpunktierten Linien A und B angedeutet.

**Figur 3** zeigt dabei außerdem dass die Hinterkante der Unterseite 5 des linken Profilstücks 1 an der Linie B und damit rechts von der Vorderkante der Oberseite 4' des rechten Profilstücks 1' liegt, was der Linie A entspricht. Damit ist eine Hinterschneidung oder Überlappung von zwei übereinandergelegten Profilstücken gegeben, die erst dann zu einem senkrecht frei durchgängigen Spalt führen würde, wenn die Linie B links von der Linie A zu liegen käme.

Es ist für den Fachmann klar, dass die erfindungsgemäßen Keramikprofilstücke zur Bildung der Schmelzbad-Sicherungsunterlage auf geeignete Weise an dem Werkstück unter oder in der Schweißfuge festgemacht werden müssen. Hierzu lassen sich beispielsweise Klebefolien einsetzen. Dies stellt für den erfahrenen Schweißer aber keine Schwierigkeiten dar.

Es wird noch einmal ausdrücklich darauf hingewiesen, dass es für die Erfindung nicht auf die Querschnittsform der Keramikprofilstücke ankommt, sondern nur darauf, dass die konvexen Vorderseiten 2 und die konkaven Rückseiten 3 aller Profilstücke 1 Kugelflächen mit gleichem Radius sind und dass die Krümmungsmittelpunkte dieser Radien nicht in der Mittelebene des Keramikstücks liegen, sondern oberhalb der Mittelebene, also beispielsweise auf der Höhe der Vertiefung 8, auf der Höher der Oberseite 4 oder im mehr oder weniger großen Abstand über der Oberseite 4, nämlich 0 - 20mm, vorzugsweise 2 - 10mm und insbesondere 3 - 8mm.

Es wird schließlich noch darauf hingewiesen, dass die Keramikprofilstücke außerdem mit in Längsrichtung durchgehend verlaufenden Öffnungen versehen sein können, die dazu dienen, sie auf einen Draht zu fädeln, um sie dann als aus Einzelteilen zusammengefügte Einheit leichter an einer Schweißfuge anbringen zu können. Je nach Anwendungsfall sind hier pro Profilstück eine oder mehrere, in der Regel wohl nicht mehr als zwei Öffnungen.

## Patentansprüche

1. Profilstück (1) aus Keramik zur Bildung von Schmelzbad-Sicherungsunterlagen für Schweißverfahren, indem eine Anzahl von Profilstücken (1) jeweils mit Vorderseite (2) an Rückseite (3) eines vorhergehenden Profilstücks (1) gleicher Bauform aneinanderlegbar sind, wobei jedes Profilstück (1) eine Oberseite (4) und eine Unterseite (5) aufweist, die durch Seitenränder (6 und 7) sowie durch die Vorderseite (2) und die Rückseite (3) miteinander verbunden sind, wobei die Vorderseite (2) und die Rückseite (3) Kugelflächen mit gleichem Radius sind und wobei die Kugelfläche an der Vorderseite (2) des Profilstücks (1) konvex, an der Rückseite (3) hingegen konkav gekrümmt ist, **dadurch gekennzeichnet, dass** die Krümmungsmittelpunkte (M1, M2) sowohl von der Vorderseite (2), als auch von der Rückseite (3) im Abstand über der Oberseite (4) des Profilstücks (1) angeordnet sind.

2. Profilstück nach Anspruch 1, **dadurch gekennzeichnet, dass** die Radien (R1, R2) der die Vorderseite (2) und die Rückseite (3) bildenden Kugelflächen gleich groß sind.

3. Profilstück nach Anspruch 1 oder 2, **dadurch gekennzeichnet, dass** der senkrechte Abstand der Krümmungsmittelpunkte (M1, M2) zu der Oberseite (4) des Profilstücks (1) gleich groß ist.

4. Profilstück nach Anspruch 1, **dadurch gekennzeichnet, dass** es einen quadratischen, rechteckigen, trapezförmigen, kreisförmigen, elliptischen oder auch polygonalen Querschnitt hat.

5. Profilstück nach Anspruch 2, **dadurch gekennzeichnet, dass** der polygonale Querschnitt der Profilstücke (1) regelmäßig oder auch unregelmäßig ist.

## Claims

1. Profiled element (1) made of ceramic for the formation of pool crater protective supports for welding processes, in which a number of profiled elements (1) with a front side (2) can be placed against the rear side (3) of a preceding profiled element (1) with the same configuration, wherein each profiled element (1) has an upper side (4) and a lower side (5), which are connected together by side edges (6 and 7) and by the front side (2) and the rear side (3), wherein the front side (2) and the rear side (3) are spherical surfaces with the same radius and wherein the spherical surface on the front side (2) of the profiled element (1) is convex, but on the rear side (3) however is concave, **characterised in that** the midpoints of curvature (M1, M2) both of the front side (2) and of the rear side (3) are arranged above the middle plane of the profiled element (1).

2. Profiled element according to claim 1, **characterised in that** the radii (R1, R2) of the spherical surfaces forming the front side (2) and the rear side (3) are of equal size.

3. Profiled element according to claim 1 or 2, **characterised in that** the vertical distance between the midpoints of curvature (M1, M2) and the upper side (4) of the profiled element (1) is of equal size.

4. Profiled element according to claim 1, **characterised in that** it has a quadratic, rectangular, trapezoidal, circular, elliptical or even a polygonal cross section.

5. Profiled element according to claim 2, **characterised in that** the polygonal cross section of the profiled elements (1) is regular or can be irregular.

## Revendications

1. Profilé en céramique pour former des cales de protection de bain de fusion pour des procédés de soudage, un certain nombre de profilés (1) étant placé les uns contre les autres respectivement avec le côté avant (2) mis contre le côté arrière (3) d'un profilé précédent (1) de même forme, chaque profilé (1) présentant un côté supérieur (4) et un côté inférieur (5) qui sont reliés l'un à l'autre par des bords latéraux (6 et 7) ainsi que par le côté avant (2) et le côté arrière (3), le côté avant (2) et le côté arrière (3) étant des surfaces sphériques de même rayon et la surface sphérique sur le côté avant (2) du profilé (1) étant convexe, sur le côté arrière (2) par contre étant courbée concave, **caractérisé en ce que** les centres de courbure (M1, M2) du côté avant (2) aussi bien que du côté arrière (3) sont placés espacés au-dessus du côté supérieur (4) du profilé (1).

2. Profilé selon la revendication 1, **caractérisé en ce que** les rayons (R1, R2) des surfaces sphériques qui forment le côté avant (2) et le côté arrière (3) sont de même grandeur.

3. Profilé selon la revendication 1 ou 2, **caractérisé en ce que** l'espacement vertical entre les centres de courbure (M1, M2) et le côté supérieur (4) du profilé (1) est de même grandeur.

4. Profilé selon la revendication 1, **caractérisé en ce qu'**il a une section transversale carrée, rectangulaire, trapézoïdale, elliptique ou même polygonale.

5. Profilé selon la revendication 2, **caractérisé en ce que** la section polygonale des profilés (1) est régulière ou également irrégulière.
